# FASCICULE DE BREVET EUROPEEN

(11) **EP 1 160 752 B1**
(45) Date de publication et mention de la délivrance du brevet: **06.01.2010**
(21) Numéro de dépôt: 01460037.3
(22) Date de dépôt: 29.05.2001
(51) Int. Cl.: G08C 17/02, H04Q 9/00, G05D 23/19

(54) **Procédé de transmission sans fil à haute fréquence pour un dispositif de régulation de chauffage à commande à distance**
Drahtloses Hochfrequenzübertragungsverfahren für eine fernsteuerbare Heizregelvorrichtung
High frequency wireless transmission process for a remote controlled heating regulation device

(30) Priorité: 02.06.2000 FR 0007091
(43) Date de publication de la demande: 05.12.2001
(73) Titulaire: DELTA DORE Société Anonyme, F-35270 Combourg (FR)
(72) Inventeur: Chouane, Philippe, 35740 Pace (FR); Raffray, Patrick, 35120 Hirel (FR)
(74) Mandataire: Maillet, Alain

(56) Documents cités:
- EP-A- 0 591 704
- EP-A- 0 651 119
- US-A- 4 408 204
- US-A- 4 839 645
- US-A- 5 874 903

## Description

La présente invention concerne un procédé de transmission sans fil à haute fréquence pour un dispositif de régulation de chauffage à commande à distance. Plus précisément, elle concerne un protocole de communication entre les différents éléments de communication d'un tel dispositif. Un dispositif de régulation de chauffage à commande à distance plus particulièrement visé par la présente invention est une chaudière commandée par un thermostat programmable qui peut être installé à distance de la chaudière.

Est bien connu le fait de mettre en oeuvre, pour un dispositif de régulation de chauffage, un procédé de régulation qui permet de réguler la température en fonction, par exemple, d'une température de consigne.

Est également bien connu le fait d'utiliser un dispositif de commande de type thermostat pour effectuer une telle régulation.

Dans certains cas, il est intéressant de pouvoir déplacer le dispositif de commande par rapport au dispositif de chauffage commandé. Ainsi, il a été proposé différents dispositifs permettant une commande à distance d'un dispositif de chauffage.

Par exemple, la demande internationale WO 88/02511 décrit un thermostat pourvu d'un émetteur destiné à émettre un signal radio pouvant être capté par un récepteur qui émet un signal électrique correspondant de commande d'un appareil de chauffage électrique. La demande de brevet européen EP 0 635 812 A1 décrit un dispositif de commande de chaudière comprenant un capteur d'ambiance qui utilise une transmission radio pour envoyer une information de température vers un récepteur dont une sortie commande la mise en route de la chaudière. Le dispositif de commande comprend un moyen de sélection de température de consigne et un moyen d'affichage de température.

Le document EP-A-591704 décrit quant à lui un procédé pour le transfert à haute fréquence de signaux de mesure, particulièrement de signaux de température. Un tel procédé est décrit en relation avec une installation qui comporte un émetteur alimenté par batterie qui code de façon spécifique à l'émetteur le signal d'émission sur un récepteur raccordé à un dispositif de commande de chauffage.

Un des problèmes que la présente invention entend résoudre est celui de l'adaptation simple d'un dispositif de commande à distance à un dispositif de chauffage déjà existant à dispositif de commande à liaison filaire. Avantageusement, la présente invention vise un dispositif de régulation de chauffage pouvant être commandé aussi bien par une commande en liaison filaire que par une commande en liaison radio. Cette adaptation doit se faire de manière simple.

Dans un dispositif de régulation de chauffage à commande filaire existant, des ensembles d'informations de commande ont des tailles différentes. Un protocole de communication pour un dispositif de commande à distance adaptable à un tel dispositif de régulation de chauffage devra notamment tenir compte de ce fait.

La présente invention a notamment pour objet de résoudre les problèmes précédents.

A cet effet, elle propose un procédé de transmission sans fil à haute fréquence pour un dispositif de régulation de chauffage à commande à distance, ledit dispositif de régulation de chauffage à commande à distance comprenant un dispositif de chauffage associé à un moyen de transmission et un dispositif de commande à distance, ledit moyen de transmission et ledit dispositif de commande à distance comprenant des moyens d'émission et de réception de signaux radio formant un système de communication adapté à l'échange d'informations suivant un protocole de communication dans lequel la réception d'un ensemble d'informations de commande donne lieu à l'émission d'un ensemble d'informations de réponse, ledit procédé de transmission étant caractérisé en ce que, pour un desdits moyens d'émission et de réception, il comprend une étape de temporisation qui est déclenchée par la réception du début dudit ensemble d'informations de commande, l'émission dudit ensemble d'informations de réponse commençant à l'issue de ladite étape de temporisation, après écoulement d'un intervalle de temps prédéterminé constant suivant l'émission dudit ensemble d'informations de commande.

Autrement dit, lorsque l'un des moyens d'émission et de réception du système, par exemple celui du dispositif de commande à distance, envoie une trame de données, et que cette trame de données est captée par le moyen d'émission et de réception destinataire, par exemple celui du moyen de transmission, un intervalle de temps prédéterminé constant s'écoule entre l'envoi de la trame de données et la réponse du moyen d'émission et de réception destinataire. Cet intervalle de temps devra bien entendu être choisi supérieur à la durée maximum d'envoi d'une trame de données.

Généralement, le moyen d'émission et de réception maître du système de communication sera celui du dispositif de commande à distance.

Selon un autre aspect de la présente invention, ledit système de communication comprend au moins un moyen répéteur adapté à recevoir un ensemble d'informations de commande et à émettre un ensemble d'informations correspondant, ledit procédé de transmission comprenant également, pour ledit moyen répéteur, une étape de temporisation qui est déclenchée par la réception du début dudit ensemble d'informations de commande, l'émission dudit ensemble d'informations correspondant commençant à l'issue de ladite étape de temporisation, après écoulement dudit intervalle de temps prédéterminé constant suivant l'émission dudit ensemble d'informations de commande.

Un tel moyen répéteur est utilisé de manière connue dans un système de transmission dans le cas de transmissions radio difficiles pour permettre la bonne transmission d'un émetteur vers un récepteur en réémettant l'information reçue de l'émetteur vers le récepteur. Dans la présente invention, lorsque l'un des moyens d'émission et de réception du système envoie une trame de données vers le moyen d'émission et de réception destinataire, et que cette trame de données est captée par le moyen répéteur, un intervalle de temps prédéterminé constant s'écoule entre l'émission de la trame et la réémission d'une trame correspondante par le répéteur. Cet intervalle de temps est égal à ceux dus aux étapes de temporisation des autres éléments du système de communication.

Bien entendu, il pourra y avoir plusieurs moyens répéteurs. Egalement, d'autres éléments de communication pourront être de la même façon mis en oeuvre avec une étape de temporisation.

Selon un autre aspect de la présente invention, ledit système de communication comprenant une pluralité d'éléments intervenant dans un ordre donné et comprenant au moins ledit dispositif de commande à distance, ledit moyen de transmission et un moyen répéteur, chacun desdits éléments, à l'exception d'un élément maître, étant adapté à recevoir un ensemble d'informations de commande provenant d'un I^{ème} élément précédant et à émettre un ensemble d'informations correspondant ou de réponse, ledit procédé de transmission comprend, pour chacun desdits éléments, à l'exception d'un élément maître, une étape de temporisation qui est déclenchée par la réception du début dudit ensemble d'informations de commande provenant dudit I^{ème} élément précédant, l'émission dudit ensemble d'informations correspondant ou de réponse commençant à l'issue de ladite étape de temporisation, après écoulement d'un temps égal à I fois ledit intervalle de temps prédéterminé constant après l'émission dudit ensemble d'informations de commande provenant dudit I^{ème} élément précédant

Selon un autre aspect de la présente invention, le procédé comprend une étape de détection pour détecter ledit début dudit ensemble d'information de commande, et ladite étape de temporisation subordonne l'émission d'un ensemble d'informations correspondant ou de réponse à l'écoulement d'un temps mesuré à partir de la détection dudit début dudit ensemble d'informations de commande, ledit temps mesuré étant égal audit intervalle de temps prédéterminé constant moins une durée correspondant à l'émission d'une partie initiale dudit ensemble d'informations.

Cette partie initiale sera généralement constituée par un champ de synchronisation et un champ de début de trame. L'émission de ces champs prenant un certain temps et la détection de la trame ne pouvant être faite qu'après réception intégrale de ces deux champs, on tient compte de la durée correspondant à leur émission. Ainsi, l'intervalle de temps prédéterminé qui est égal à la somme de cette durée et du temps réellement décompté par l'étape de temporisation correspond précisément à la période des émissions dans le système.

Selon un autre aspect de la présente invention, en rapport avec la caractéristique précédemment décrite dans le cas où un élément de communication reçoit un ensemble d'informations de commande provenant d'un I^{ème} élément précédant, le procédé comprend une étape de détection pour détecter ledit début dudit ensemble d'information de commande provenant d'un I^{ème} élément précédant, et ladite étape de temporisation subordonne l'émission d'un ensemble d'informations correspondant ou de réponse à l'écoulement d'un temps mesuré à partir de la détection dudit début dudit ensemble d'informations de commande provenant d'un I^{ème} élément précédant, ledit temps mesuré étant égal à I fois ledit intervalle de temps prédéterminé constant moins une durée correspondant à l'émission d'une partie initiale dudit ensemble d'informations de commande provenant d'un I^{ème} élément précédant.

Selon un autre aspect de la présente invention, le procédé comprend une étape de mise en émission dudit dispositif de commande à distance pendant un premier temps prédéterminé constant et une étape de mise en réception dudit dispositif de commande à distance pendant un second temps inférieur à un temps maximum prédéterminé.

Avantageusement, ledit système de communication comprenant N éléments intervenant dans un ordre donné et comprenant au moins ledit dispositif de commande à distance et ledit moyen de transmission, ladite étape de temporisation étant exécutée pour chacun desdits éléments, à l'exception dudit dispositif de commande à distance formant élément maître, ledit premier temps prédéterminé a une valeur comprise entre (N-2) fois ledit intervalle de temps prédéterminé constant et (N-1) fois ledit intervalle de temps prédéterminé constant.

Avantageusement, ledit système de communication comprenant N éléments intervenant dans un ordre donné et comprenant au moins ledit dispositif de commande à distance et ledit moyen de transmission, ladite étape de temporisation étant exécutée pour chacun desdits éléments, à l'exception dudit dispositif de commande à distance formant élément maître, ledit temps maximum prédéterminé a une valeur comprise entre (N-1) fois ledit intervalle de temps prédéterminé constant et N fois ledit intervalle de temps prédéterminé constant.

Selon un autre aspect de la présente invention, ledit système de communication effectuant de manière périodique des opérations d'échange d'informations, ledit procédé de transmission comprend également une étape de vérification pour vérifier si l'émission d'un ensemble d'informations de commande donne lieu à la réception d'un ensemble d'informations de réponse, et une étape de décalage pour décaler une opération d'échange d'informations d'une durée prédéterminée inférieure à la période desdites opérations d'échange d'informations, lorsque l'émission d'un ensemble d'informations de commande d'une opération d'échange d'informations précédente n'a pas donné lieu à la réception d'un ensemble d'informations de réponse, les opérations d'échange d'informations postérieures à ladite étape de décalage reprenant avec la même période à partir de ladite opération d'échange d'informations décalée.

Avantageusement, ladite durée prédéterminée est calculée à partir d'une information d'identification dudit système de communication contenue dans ledit dispositif de commande à distance. Il s'agit généralement d'une adresse système.

Selon un autre aspect de la présente invention, ledit dispositif de chauffage est une chaudière à commande électronique et ledit dispositif de commande à distance est un thermostat programmable.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente de manière schématique un dispositif de régulation de chauffage à commande à distance, et
la Fig. 2 est un chronogramme montrant de manière schématique les règles de temporisation pour un cycle de fonctionnement du dispositif de la Fig. 1.

Globalement, un procédé de transmission sans fil pour un dispositif de régulation de chauffage à commande à distance selon la présente invention s'applique à un dispositif de régulation de chauffage à commande à distance comprenant un dispositif de chauffage associé à un moyen de communication et un dispositif de commande à distance.

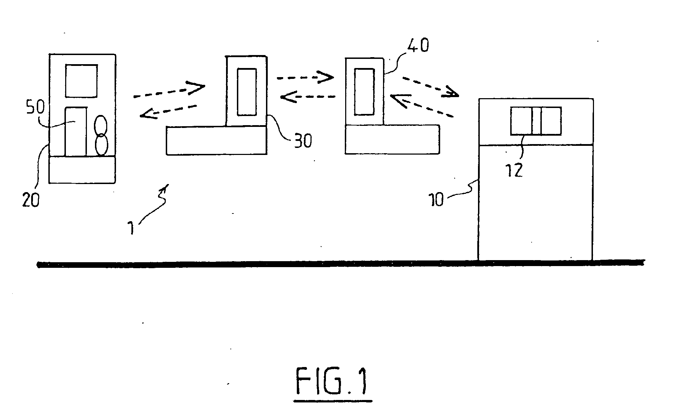

Par exemple, il peut s'appliquer au dispositif de régulation de chauffage 1 décrit sur la Fig. 1.

Globalement, le dispositif de régulation de chauffage 1 comprend une chaudière à commande électronique 10, un transmetteur 12, deux répéteurs 30 et 40 et un thermostat automatique programmable 20.

Une unité de traitement électronique de la chaudière 10 est pilotée par le transmetteur 12 qui est lui même commandé par le thermostat automatique programmable 20 avec lequel il est en liaison radio. Ainsi qu'il est bien connu, le thermostat automatique programmable 20 comprend une unité de transmission, une unité de mesure, une unité de traitement électronique, une unité d'affichage 50 et des touches de saisie de données. Ainsi que le montrent les flèches sur la Fig. 1, la liaison entre le thermostat automatique programmable 20 et le transmetteur 12 est une liaison bidirectionnelle à l'alternat (semi-duplex). Ainsi qu'il est bien connu, les répéteurs 30 et 40 reçoivent et réémettent les signaux afin d'assurer une bonne qualité de transmission. Ces répéteurs 30 et 40 sont facultatifs. Ils ne sont mis en oeuvre que pour des conditions de transmission difficiles. Bien entendu, un seul répéteur peut être utilisé. Chaque répéteur comprend un dispositif d'affectation de numéro de répéteur commandé par un commutateur.

Globalement, les différents éléments de communication du dispositif comprennent chacun des moyens connus d'émission et de réception de signaux radio adaptés à échanger des informations de commande et des informations d'identification suivant un protocole de communication donné.

Plus particulièrement, le thermostat automatique programmable 20 comporte un module émetteur/récepteur maître et le transmetteur 12 et les répéteurs 30 et 40 comportent chacun un module émetteur/récepteur esclave. Dans un exemple de réalisation, le débit de transmission est de 2400 bauds. L'encodage des bits élémentaires se fait selon le mode dit biphase mark, c'est-à-dire que le niveau logique change systématiquement en début de bit et change également au milieu des bits de niveau 1. Autrement dit, un niveau 0 ou 1 sans commutation pendant 833 µs détermine un bit à 0 tandis, qu'une commutation intervenant au bout de 416,5 µs détermine un bit à 1.

Les données d'information sont structurées en trames. Chaque trame est constituée d'une succession de bits élémentaires organisés en champs logiques. Typiquement, une trame peut comprendre d'abord des champs de synchronisation qui, encadrant la trame, ont pour objet une synchronisation du récepteur au niveau du bit tout en écartant la partie utile de la trame des phases de démarrage et d'arrêt de l'émetteur pendant lesquelles les bits transmis peuvent être altérés. La trame comprend également des champs de début de trame et de fin de trame, généralement de taille un octet, permettant de détecter le début et la fin de la trame et de synchroniser le récepteur au niveau de l'octet. Un champ adresse système contient une information d'identification de l'installation appelée adresse système. Cette adresse système est destinée à empêcher les interactions entre deux installations voisines. Un champ d'adresse émetteur permet d'identifier l'élément qui émet sur la ligne. Il peut s'agir du thermostat automatique programmable 20, du transmetteur 12, d'un répéteur 30 ou 40 ou de tout autre élément de communication intervenant éventuellement dans le dispositif de communication. Ainsi, tous les éléments de communication sont renseignés sur la provenance de l'information portée par une trame donnée. Un champ d'adresse destinataire permet d'identifier le destinataire final d'une trame. Il peut s'agir soit du thermostat automatique programmable 20, soit du transmetteur 12. Un champ de vérification contient, par exemple, une valeur correspondant à une combinaison des octets utiles de la trame, de manière à pouvoir procéder à une vérification de l'intégrité de la trame transmise, ainsi qu'il est bien connu. Un champ d'informations de commande regroupe les données de commande du dispositif de régulation de chauffage. Ce champ correspond donc aux données circulant sur une liaison filaire entre le thermostat automatique programmable et la chaudière lorsque ces derniers sont raccordés électriquement, c'est-à-dire lorsqu'on se passe de la liaison radio. Ce champ comprend généralement des sous-champs d'identification caractérisant, par exemple la taille de l'information contenue, l'émetteur et le destinataire, et un sous-champ contenant l'information de commande proprement dite. La taille de ce dernier sous-champ peut varier, selon l'information qu'il contient. L'émetteur et le destinataire peuvent être une unité de traitement de base, intervenant au niveau de la chaudière 10, une unité de traitement d'affichage, intervenant au niveau du module d'affichage 50 ou une unité de traitement de thermostat, intervenant au niveau du thermostat automatique programmable 20. Le destinataire d'une information de commande peut être également l'ensemble de ces trois unités. Dans l'exemple de réalisation mentionné plus haut, une trame est constituée d'un premier champ de synchronisation de 16 bits, d'un champ de début de trame de 8 bits, d'un champ d'adresse système de 16 bits, d'un champ d'adresse émetteur de 4 bits, d'un champ d'adresse de destinataire de 4 bit, d'un champ d'informations de commande de N x 8 bits, avec N compris entre 2 et 10, d'un champ de vérification de 8 bits, d'un champ de fin de trame de 8 bits et d'un champ de synchronisation de 8 bits. Le champ d'informations de commande contient un sous-champ de numéro de trame de 4 bits, un sous-champ de longueur de trame de 4 bits, un sous-champ d'identification de l'émetteur de 4 bits, un sous-champ d'identification du destinataire de 4 bits et un sous-champ de commande de taille comprise entre 0 et 8 octets. Dans cet exemple de réalisation, chaque trame a une longueur variant entre 11 et 19 octets selon la quantité d'informations de commande contenue. La longueur minimale de la trame est de 11 octets pour 6 octets utiles, soit 88 bits ou 98 bits avec des bits d'insertion de zéro. La longueur maximale de la trame est de 19 octets pour 14 octets utiles, soit 152 bits ou 175 bits avec des bits d'insertion de zéro. Les données codées sur plusieurs octets sont transférées dans le sens poids forts-poids faibles. Il faut insérer un bit à 0 après cinq bits consécutifs à 1 dans tous les champs à l'exception des champs de début et de fin de trame.

Globalement, un procédé de transmission sans fil comprend, pour un cycle de transmission permettant de réaliser une opération de commande, des transmissions successives de trames d'information telles que celles décrites précédemment, d'abord montantes du thermostat automatique programmable 20 vers le transmetteur 12 en passant éventuellement par les répéteurs 30 et 40, puis descendantes du transmetteur 12 vers le thermostat automatique programmable 20 en passant éventuellement par les répéteurs 30 et 40.

Le module émetteur/récepteur du thermostat automatique programmable 20 étant maître du système de communication, les modules émetteur/récepteur des autres éléments de communication du système sont à son écoute. Sur un cycle de transmission, le thermostat automatique programmable va d'abord envoyer une trame en direction du transmetteur 12, puis, après un certain intervalle de temps, il va se placer en réception en attendant la première bonne réception d'information émanant du transmetteur 12 ou des répéteurs 30 et 40 si ils sont présents. L'état de réception est maintenu pendant un autre intervalle de temps.

Les intervalles de temps pendant lesquels le module émetteur/récepteur du thermostat automatique programmable 20 est dans un état d'émission ou de réception dépendent du temps de transmission des trames. Selon l'invention, les émissions par les différents éléments du système se font à intervalles réguliers. Autrement dit, un intervalle de temps constant sépare la réception d'une trame et l'émission d'une trame correspondante par un élément du système de communication, quelle que soit par ailleurs la taille de cette trame. Par exemple, dans le cas où il n'y a pas de répéteurs, lorsque le module émetteur/récepteur du thermostat automatique programmable 20 envoie une trame, contenant par exemple des informations de commande à destination de la chaudière 10, le transmetteur 12 va recevoir cette trame et va attendre un intervalle de temps prédéterminé avant de renvoyer vers le thermostat une trame constituant la réponse de la chaudière aux informations de commande envoyées par le module émetteur/récepteur du thermostat automatique programmable 20. Dans le cas de la Fig. 1 où il y a deux répéteurs, lorsque le module émetteur/récepteur du thermostat automatique programmable 20 envoie une trame, contenant par exemple des informations de commande à destination de la chaudière 10, le répéteur 30 va recevoir cette trame et va attendre un intervalle de temps prédéterminé avant de renvoyer une trame correspondante. De même, lorsque le répéteur 40 reçoit la trame provenant du répéteur 30, il va attendre ce même intervalle de temps prédéterminé avant de renvoyer une trame correspondante. Enfin, lorsque le transmetteur 12 reçoit la trame provenant du répéteur 40, il va attendre ce même intervalle de temps prédéterminé avant de renvoyer vers le thermostat une trame constituant la réponse de la chaudière 10. A nouveau, les répéteurs 40 et 30 utiliseront chacun ce même intervalle de temps pour la réémission de cette réponse de la chaudière. La provenance d'une trame est identifiée par le champ d'adresse émetteur. Le champ d'adresse destinataire permet de préciser s'il s'agit d'une trame montante ou descendante, c'est-à-dire allant du thermostat vers la chaudière ou de la chaudière vers le thermostat. Bien entendu, l'intervalle de temps prédéterminé sera modifié si la trame provient d'un élément de communication qui n'est pas l'élément précédant du système de communication. Plus précisément, lorsque l'un des éléments de communication reçoit une trame provenant du I^{ème} élément précédant, l'intervalle de temps prédéterminé sera multiplié par I. Par exemple, dans le cas du système à deux répéteurs, lorsque le répéteur 30 reçoit une trame provenant du transmetteur 12, soit le deuxième élément précédant dans l'ordre descendant, l'intervalle de temps avant réémission est multiplié par 2. Lorsque le transmetteur 12 reçoit une trame directement du thermostat 20 , soit le troisième élément précédant dans l'ordre montant, l'intervalle de temps avant réponse est multiplié par trois.

En pratique, lorsqu'un élément du système de communication reçoit une trame, une temporisation est déclenchée. Cette temporisation n'autorise l'émission d'une trame correspondante que lorsque l'intervalle de temps prédéterminé est écoulé. En pratique, la détection d'une trame se fait par la détection du champ de début de trame. Etant donné que ce champ et le champ de synchronisation qui le précède ont une certaine longueur correspondant à une durée de début de trame, la période des émissions dans le système de communication est égale à la somme de cette durée et du temps d'attente décompté par la temporisation. Le temps décompté par la temporisation correspond au temps réel d'attente de l'élément du système avant émission qui est inférieur à la période des émissions alors que l'intervalle de temps prédéterminé correspond exactement à la période des émissions.

Dans l'exemple de réalisation évoqué plus haut, l'intervalle de temps prédéterminé est de 200 ms. Les champs de synchronisation et de début de trame ayant une longueur de 3 octets, la durée de début de trame est de 20 ms. Le temps d'attente décompté par l'horloge d'un élément du système de communication contenant deux répéteurs est donné par le tableau 1.

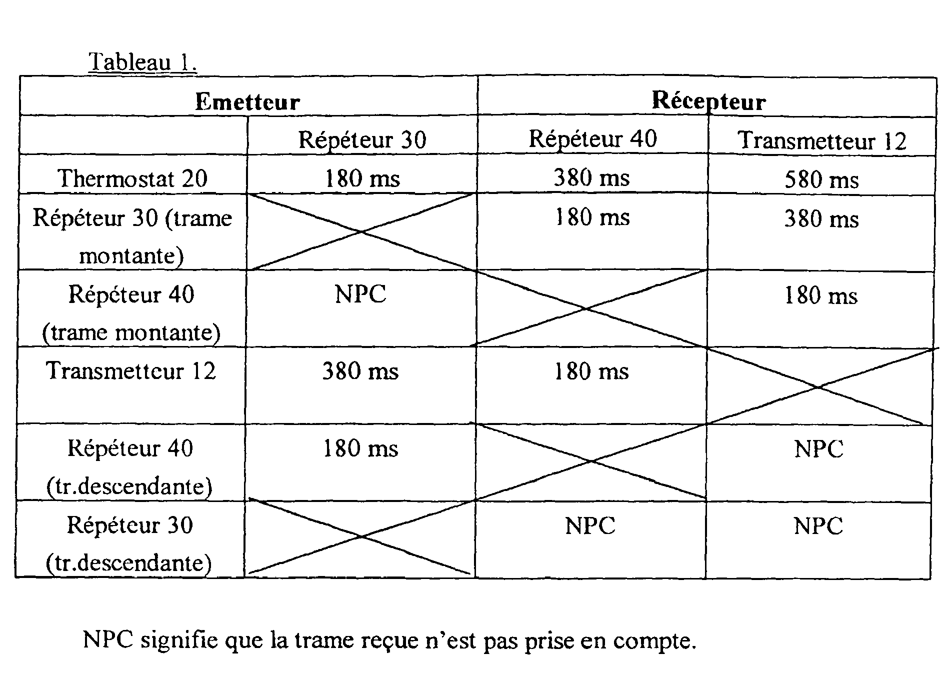

Par exemple, lorsque le transmetteur 12 reçoit une trame provenant directement du thermostat 20, le temps d'attente décompté par la temporisation est de 580 ms ce qui fait que l'intervalle entre l'émission d'une trame de commande par le thermostat 20 et l'émission de la réponse de la chaudière 10 est de 600 ms. Cet intervalle correspond à la somme de l'intervalle de 200 ms entre l'émission de la trame de commande et l'émission de la trame correspondante par le répéteur 30, de l'intervalle de 200 ms entre cette dernière émission et l'émission de la trame correspondante par le répéteur 40 et de l'intervalle entre cette dernière émission et l'émission de la réponse de la chaudière 10 par le transmetteur 12.

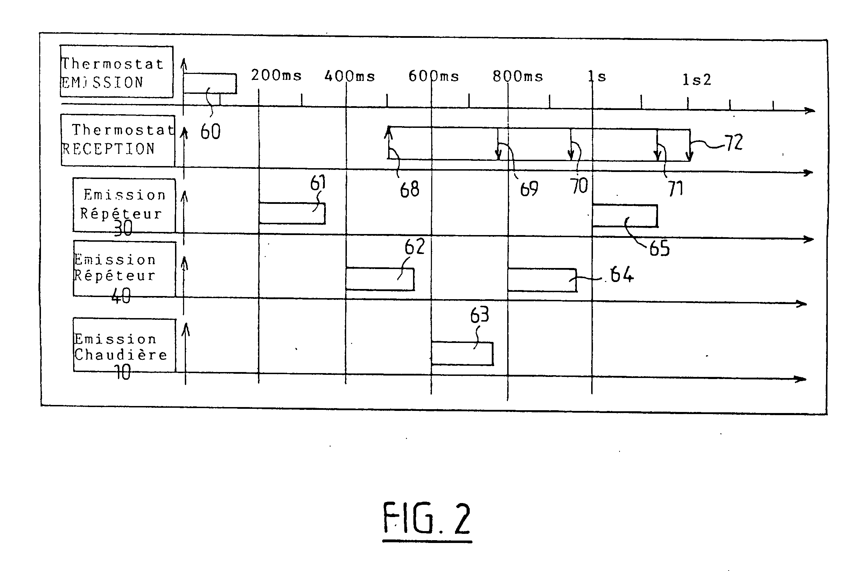

La Fig. 2 est un chronogramme qui représente de manière schématique les règles de temporisation pour un cycle de fonctionnement avec deux répéteurs.

En début de cycle, le thermostat 20 est en émission. La barre 60 représente le temps d'émission maximum d'une trame par le thermostat. Ce temps d'émission maximum est inférieur et sensiblement égal à 150 ms pour une trame de longueur comprise entre 11 et 19 octets. Les barres 61 et 62 représentent les temps d'émission maximum de la trame montante correspondante par le répéteur 30 et le répéteur 40. La barre 63 représente le temps d'émission maximum de la réponse de la chaudière 10 par le transmetteur 12. Les barres 64 et 65 représentent les temps maximum d'émission de la trame descendante correspondante par le répéteur 40 et le répéteur 30. Les trames étant toujours de longueur comprise entre 11 et 19 octets, tous les temps d'émission maximum précédemment évoqués sont inférieurs et sensiblement égaux à 150 ms. La flèche 68 indique l'instant où le module émetteur/récepteur du thermostat automatique programmable 20 se place en réception, soit, dans cet exemple, 0,5 seconde après le déclenchement de l'horloge du module émetteur/récepteur maître. Lorsque le thermostat 20 se place en réception, au moins les deux premiers champs dont le champ de début de trame de la trame montante ont déjà été réémis par le répéteur 2. Selon l'invention, ainsi qu'il a été déjà mentionné, l'étape de mise en émission du thermostat 20 dure un premier temps constant qui doit être choisi entre (N-2) fois l'intervalle de temps prédéterminé constant et (N-1) fois l'intervalle de temps prédéterminé constant, où N est le nombre d'éléments de communication du système. Ici, N est égal à 4 et l'intervalle de temps prédéterminé est égal à 200 ms. C'est-à-dire que la durée du mode émission doit être comprise entre 400 et 600 ms. On a ainsi pu choisir 500 ms, ce qui permet d'être sûr qu'une partie importante de la trame montante émise par le répéteur 40 a déjà été émise. La flèche 69 indique l'instant de réveil minimum, correspondant à l'instant où le thermostat 20 a entièrement reçu la trame émise par le transmetteur 12, soit 250 ms après la mise en réception du thermostat 20. La flèche 70 indique l'instant de réveil moyen, correspondant à l'instant où le thermostat 20 a entièrement reçu la trame émise par le répéteur 40, soit 450 ms après la mise en réception du thermostat 20. La flèche 71 indique l'instant de réveil maximum, correspondant à l'instant où le thermostat 20 a entièrement reçu la trame émise par le répéteur 30, soit 650 ms après la mise en réception du thermostat 20. La flèche 72 indique l'instant correspondant à la fin du temps de fonctionnement maximum sans réception qui est fixé à 700 ms après la mise en réception du thermostat 20. L'état de réception est donc maintenu pendant un intervalle de temps compris entre 300 ms et 700 ms. L'information est entièrement traitée en un temps inférieur à 1,2 s.

Ainsi qu'il a été mentionné plus haut, selon l'invention, pour un système comprenant N éléments, l'état de réception est maintenu jusqu'à la première bonne réception émanant de la chaudière ou des répéteurs, mais la durée de cet état de réception ne doit pas excéder, en l'absence de toute réception, une durée maximum prédéterminée qui doit être choisie entre (N-1) fois l'intervalle de temps prédéterminé et N fois l'intervalle de temps prédéterminé. Dans l'exemple précédent, avec N égal à 4 et l'intervalle de temps prédéterminé égal à 200 ms, cette durée doit être choisie entre 600 ms et 800 ms, selon le moment choisi de mise en réception. Etant donné que la mise en réception se fait, dans cet exemple, 0,5 s après le début du cycle de transmission, la durée maximum de l'état de réception est choisie égale à 700 ms.

Avantageusement, dans le présent exemple de réalisation, un cycle de transmission est lancé à intervalle régulier toutes les minutes. Il est également lancé au moment d'un changement de paramètres.

Un autre aspect de la présente invention concerne le cas où, après émission d'une trame par le thermostat, la chaudière ne répond pas. Dans un premier temps, le thermostat va émettre, dix secondes après l'émission de la trame restée sans réponse, une trame de confirmation. Si cette nouvelle trame reste sans réponse, le protocole de communication doit envisager l'éventualité d'une synchronisation malheureuse avec un système de communication voisin qui créé des interférences. Le problème se pose notamment dans le cas où deux dispositifs de régulation de chauffage voisins coexistent et fonctionnent de manière synchrone.

Selon l'invention, si il n'y a toujours pas de réponse après envoi de la trame d'information du cycle suivant, une nouvelle trame est envoyée après un certain délai. La durée de ce délai est indexée sur une information d'identification de l'installation, généralement l'adresse système. Elle est généralement comprise entre la durée du délai d'envoi d'une trame de confirmation et la durée de la période des cycles de transmission. Dans le présent exemple, ce délai est calculé en fonction de l'adresse système contenue dans le thermostat automatique programmable 20 de manière à être compris entre 10 secondes et 50 secondes à intervalles de 5 secondes. De la sorte, les deux systèmes, qui n'ont pas la même adresse système, se trouvent désynchronisés. A partir de cet envoi de trame décalé, les opérations de communication reprennent avec la même période, c'est à dire, dans le cas présent, une période de une minute.

## Revendications

1. Procédé de transmission sans fil à haute fréquence pour un dispositif de régulation de chauffage à commande à distance (1), ledit dispositif de régulation de chauffage à commande à distance comprenant un dispositif de chauffage (10) associé à un moyen de transmission (12) et un dispositif de commande à distance (20), procédé dans lequel ledit moyen de transmission (12) et ledit dispositif de commande à distance (20) comprennent des moyens d'émission et de réception de signaux radio formant un système de communication adapté à l'échange d'informations suivant un protocole de communication dans lequel la réception d'un ensemble d'informations de commande donne lieu à l'émission d'un ensemble d'informations de réponse, **caractérisé en ce que**, pour un des moyens d'émission et de réception (12), il comprend une étape de temporisation qui est déclenchée par la réception du début dudit ensemble d'informations de commande, l'émission dudit ensemble d'informations de réponse commençant à l'issue de ladite étape de temporisation, après écoulement d'un intervalle de temps prédéterminé constant suivant l'émission dudit ensemble d'informations de commande.

2. Procédé de transmission sans fil selon la revendication 1, **caractérisé en ce que** ledit système de communication comprend au moins un moyen répéteur (30 ; 40) adapté à recevoir un ensemble d'informations de commande et à émettre un ensemble d'informations correspondant, ledit procédé de transmission comprenant également, pour ledit moyen répéteur (30 ;40), une étape de temporisation qui est déclenchée par la réception du début dudit ensemble d'informations de commande, l'émission dudit ensemble d'informations correspondant commençant à l'issue de ladite étape de temporisation, après écoulement dudit intervalle de temps prédéterminé constant suivant l'émission dudit ensemble d'informations de commande.

3. Procédé de transmission sans fil selon la revendication 2, **caractérisé en ce que**, ledit système de communication comprenant une pluralité d'éléments (20, 30, 40, 12) intervenant dans un ordre donné et comprenant ledit dispositif de commande à distance (20), ledit moyen de transmission (12) et au moins un moyen répéteur (30 ;40), chacun desdits éléments (30, 40, 12), à l'exception d'un élément maître (20), étant adapté à recevoir un ensemble d'informations de commande provenant d'un Ième élément précédant (20, 30, 40, 12) et à émettre un ensemble d'informations correspondant ou de réponse, ledit procédé de transmission comprend, pour chacun desdits éléments (30, 40, 12), à l'exception d'un élément maître, une étape de temporisation qui est déclenchée par la réception du début dudit ensemble d'informations de commande provenant dudit Ième élément précédant, l'émission dudit ensemble d'informations correspondant ou de réponse commençant à l'issue de ladite étape de temporisation, après écoulement d'un temps égal à I fois ledit intervalle de temps prédéterminé constant après l'émission dudit ensemble d'informations de commande provenant dudit Ième élément précédant.

4. Procédé de transmission sans fil selon la revendication 1 ou 2, **caractérisé en ce qu'**il comprend une étape de détection pour détecter ledit début dudit ensemble d'information de commande, et ladite étape de temporisation subordonne l'émission d'un ensemble d'informations correspondant ou de réponse à l'écoulement d'un temps mesuré à partir de la détection dudit début dudit ensemble d'informations de commande, ledit temps mesuré étant égal audit intervalle de temps prédéterminé constant moins une durée correspondant à l'émission d'une partie initiale dudit ensemble d'informations.

5. Procédé de transmission sans fil selon la revendication 3, **caractérisé en ce qu'**il comprend une étape de détection pour détecter ledit début dudit ensemble d'information de commande, et ladite étape de temporisation subordonne l'émission d'un ensemble d'informations correspondant ou de réponse à l'écoulement d'un temps mesuré à partir de la détection dudit début dudit ensemble d'informations de commande provenant dudit Ième élément précédant, ledit temps mesuré étant égal à I fois ledit intervalle de temps prédéterminé constant moins une durée correspondant à l'émission d'une partie initiale dudit ensemble d'informations de commande provenant dudit Ième élément précédant.

6. Procédé de transmission sans fil selon l'une quelconque des revendications précédentes, **caractérisé en ce qu'**il comprend une étape de mise en émission dudit dispositif de commande à distance (20) pendant un premier temps prédéterminé constant et une étape de mise en réception dudit dispositif de commande à distance (20) pendant un second temps inférieur à un temps maximum prédéterminé.

7. Procédé de transmission sans fil selon la revendication 6, **caractérisé en ce que**, ledit système de communication comprenant N éléments (20, 30, 40, 12) intervenant dans un ordre donné et comprenant au moins ledit dispositif de commande à distance (20) et ledit moyen de transmission (12), ladite étape de temporisation étant exécutée pour chacun desdits éléments (30, 40, 12), à l'exception dudit dispositif de commande à distance (20) formant élément maître, ledit premier temps prédéterminé a une valeur comprise entre (N-2) fois ledit intervalle de temps prédéterminé constant et (N-1) fois ledit intervalle de temps prédéterminé constant.

8. Procédé de transmission sans fil selon la revendication 6 ou 7, **caractérisé en ce que**, ledit système de communication comprenant N éléments (20, 30, 40, 12) intervenant dans un ordre donné et comprenant au moins ledit dispositif de commande à distance (20) et ledit moyen de transmission (12), ladite étape de temporisation étant exécutée pour chacun desdits éléments (20, 30, 40, 12), à l'exception dudit dispositif de commande à distance (20) formant élément maître, ledit temps maximum prédéterminé a une valeur comprise entre (N-1) fois ledit intervalle de temps prédéterminé constant et N fois ledit intervalle de temps prédéterminé constant.

9. Procédé de transmission sans fil selon l'une quelconque des revendications précédentes, **caractérisé en ce que**, ledit système de communication effectuant de manière périodique des opérations d'échange d'informations, ledit procédé de transmission comprend également une étape de vérification pour vérifier si l'émission d'un ensemble d'informations de commande donne lieu à la réception d'un ensemble d'informations de réponse, et une étape de décalage pour décaler une opération d'échange d'informations d'une durée prédéterminée inférieure à la période desdites opérations d'échange d'informations, lorsque l'émission d'un ensemble d'informations de commande d'une opération d'échange d'informations précédente n'a pas donné lieu à la réception d'un ensemble d'informations de réponse, les opérations d'échange d'informations postérieures à ladite étape de décalage reprenant avec la même période à partir de ladite opération d'échange d'informations décalée.

10. Procédé de transmission sans fil selon la revendication 8, **caractérisé en ce que** ladite durée prédéterminée est calculée à partir d'une information d'identification dudit système de communication contenue dans ledit dispositif de commande à distance (20).

11. Procédé de transmission sans fil selon l'une quelconque des revendications précédentes, **caractérisé en ce que**, ledit dispositif de chauffage (10) est une chaudière à commande électronique et ledit dispositif de commande à distance (20) est un thermostat programmable.

## Claims

1. High frequency wireless transmission process for a remote-controlled heating regulation apparatus (1), said remote-controlled heating regulation apparatus comprising a heating apparatus (10) associated with transmission means (12) and a remote control device (20), wherein the said transmission means (12) and the said remote control device (20) comprise means for emitting and receiving radio signals forming a communications system adapted to the exchange of data in accordance with a communications protocol wherein the receiving of a set of control data leads to the emission of a set of response data, **characterised in that**, for one of the emission and receiving means (12), it comprises a timing step that is triggered by the receiving of the start of said set of control data, the emission of said set of response data beginning at the end of said timing step, after a predetermined constant time interval has elapsed following the emission of said set of control data.

2. Wireless transmission process according to claim 1, **characterised in that** the said communications system comprises at least one repeater means (30; 40) adapted to receive a set of control data and to emit a corresponding set of data, the transmission process also comprising, for said repeater means (30; 40), a timing step that is triggered by the receiving of the start of said set of control data, the emission of said corresponding set of data beginning at the end of said timing step, after the said predetermined constant time interval has elapsed following the emission of said set of control data,

3. Wireless transmission process according to claim 2, **characterised in that**, with the communications system comprising a plurality of elements (20, 30, 40,12) acting in a given order and comprising said remote control device (20), the said transmission means (12) and at least one repeater means (30; 40), each of the said elements (3 0, 40, 12), with the exception of a master element (20), being adapted to receive a set of control data coming from a 1^{th} preceding element (20, 30, 40, 12) and to emit a corresponding or response set of data, the said transmission process comprises for each of the said elements (30, 40, 12), with the exception of a master element, a timing step which is triggered by the receiving of the start of said set of control data coming from said preceding I^{th} element, the emission of said set of corresponding or response data beginning at the end of said timing step, after a period of time has elapsed which is equal to I times the said predetermined constant time interval after the emission of said set of control data coming from said preceding I^{th} element.

4. Wireless transmission process according to claim 1 or 2, **characterised in that** it comprises a detection step for detecting the said start of said set of control data, and the said timing step subordinates the emission of a corresponding or response data set to the passing of a period of time measured from the detection of said start of said set of control data, the said measured period of time being equal to said predetermined constant time interval minus a length of time corresponding to the emission of an initial part of said set of data.

5. Wireless transmission process according to claim 3, **characterised in that** it comprises a detection step for detecting the said start of said set of control data, and the said timing step subordinates the emission of a corresponding or response data set to the passing of a period of time measured from the detection of said start of said set of control data coming from said preceding I^{th} element, the said measured period of time being equal to I times the said predetermined constant time interval minus a length of time corresponding to the emission of an initial part of said set of control data coming from said preceding I^{th} element.

6. Wireless transmission process according to any one of the preceding claims, **characterised in that** it comprises a step of setting said remote control device (20) to emission for a first predetermined constant time and a step of setting said remote control device (20) to receiving for a second period of time that is less than a predetermined maximum time.

7. Wireless transmission process according to claim 6, **characterised in that**, with the said communications system comprising N elements (20, 30, 40, 12) acting in a given order and comprising at least the said remote control device (20) and the said transmission means (12), the said timing step being carried out for each of the said elements (30, 40; 12), with the exception of the said remote control device (20) forming the master element, the said first predetermined time has a value of between (N-2) times the said predetermined constant time interval and (N-1) times the said predetermined constant time interval.

8. Wireless transmission process according to claim 6 or 7, **characterised in that**, with the said communications system comprising N elements (20, 30, 40, 12) acting in a given order and comprising at least the said remote control device (20) and the said transmission means (12), the said timing step being carried out for each of the said elements (30, 40, 12), with the exception of the said remote control device (20) forming the master element, the said predetermined maximum time has a value of between (N-1) times the said predetermined constant time interval and N times the said predetermined constant time interval.

9. Wireless transmission process according to any one of the preceding claims, **characterised in that**, with the said communications system periodically carrying out data exchange operations, the said transmission process also comprises a verification step for verifying whether the emission of a set of control data gives rise to the receiving of a set of response data, and an offsetting step for offsetting a data exchange operation by a predetermined length of time that is less than the period of said data exchange operations, when the emission of a set of control data of a previous data exchange operation has not caused a set of response data to be received, the data exchange operations subsequent to said offsetting step resuming with the same periodicity starting from said offset data exchange operation.

10. Wireless transmission process according to claim 8, **characterised in that** said predetermined length of time is calculated from identification data for the said communications system contained in said remote control device (20).

11. Wireless transmission process according to any one of the preceding claims, **characterised in that** the said heating device (10) is an electronically controlled boiler and the said remote control device (20) is a programmable thermostat.

## Patentansprüche

1. Verfahren zur drahtlosen HF-Übertragung für eine Fernsteuer-Heizregelvorrichtung (1), die eine Heizvorrichtung (10) aufweist, die einer Übertragungseinrichtung (12) und einer Fernsteuerungseinrichtung (20) zugeordnet ist, bei dem die Übertragungseinrichtung (12) und die Fernsteuerungseinrichtung (20) Mittel zum Senden und Empfangen von Funksignalen aufweisen, die ein Kommunikationssystem zum Austausch von Daten entsprechend einem Kommunikationsprotokoll bilden, in dem der Empfang eines Steuerdatensatzes das Senden eines Antwortdatensatzes auslöst, **dadurch gekennzeichnet, dass** es für eine der Sende- und Empfangseinrichtungen (12) einen Verzögerungsschritt aufweist, der vom Empfang des Beginns des Steuerdatensatzes getriggert wird, wobei das Senden des Antwortdatensatzes am Ende des Verzögerungsschritts beginnt, nachdem ein bestimmtes konstantes Zeitintervall nach dem Senden des Steuerdatensatzes abgelaufen ist.

2. Verfahren zur drahtlosen Übertragung nach Anspruch 1, **dadurch gekennzeichnet, dass** das Kommunikationssystem wenigstens einen Repeater (30; 40) zum Empfang eines Steuerdatensatzes und zum Senden eines entsprechenden Datensatzes aufweist, wobei das Übertragungsverfahren für den Repeater (30; 40) auch einen Verzögerungsschritt aufweist, der vom Empfang des Beginns des Steuerdatensatzes getriggert wird, wobei das Senden des entsprechenden Datensatzes am Ende des Verzögerungsschritts beginnt, nachdem das vorbestimmte konstante Zeitintervall nach Senden des Steuerdatensatzes abgelaufen ist.

3. Verfahren zur drahtlosen Übertragung nach Anspruch 2, **dadurch gekennzeichnet, dass**, wenn das Kommunikationssystem mehrere Elemente (20, 30, 40, 12) aufweist, die in einer bestimmten Reihenfolge agieren und die die Fernsteuereinrichtung (20), die Übertragungseinrichtung (12) und wenigstens einen Repeater (30; 40) umfassen, jedes der Elemente (30, 40, 12) mit Ausnahme eines Masterelements (20) einen Steuerdatensatz empfangen kann, der von einem I-ten vorherigen Element (20, 30, 40, 12) kommt und einen entsprechenden Datensatz bzw. einen Antwortdatensatz senden kann, das Übertragungsverfahren für jedes der Elemente (30, 40, 12) mit Ausnahme eines Masterelements einen Verzögerungsschritt umfasst, vom Empfang des Beginns des Steuerdatensatzes getriggert wird, der vom I-ten vorherigen Element kommt, wobei das Senden des entsprechenden Datensatzes bzw. des Antwortdatensatzes am Ende des Verzögerungsschritts beginnt, nachdem eine Zeitperiode abgelaufen ist, die gleich dem I-fachen des vorbestimmten konstanten Zeitintervalls nach dem Senden des Steuerdatensatzes ist, der von dem vorherigen I-ten Element kommt.

4. Verfahren zur drahtlosen Übertragung nach Anspruch 1 oder 2, **dadurch gekennzeichnet, dass** es einen Detektionsschritt zum Erfassen des Beginns des Steuerdatensatzes aufweist, und der Verzögerungsschritt das Senden eines entsprechenden Datensatzes bzw. eines Antwortdatensatzes dem Ablauf einer Zeitperiode unterordnet, die von der Erfassung des Beginns des Steuerdatensatzes an gemessen wird, wobei die gemessene Zeit gleich dem vorbestimmten konstanten Zeitintervall minus einer Zeitdauer entsprechend dem Senden eines Anfangsteils des Datensatzes ist.

5. Drahtloses Übertragungsverfahren nach Anspruch 3, **dadurch gekennzeichnet, dass** es einen Detektionsschritt zum Erfassen des Beginns des Steuerdatensatzes aufweist, und der Verzögerungsschritt das Senden eines entsprechenden Datensatzes bzw. eines Antwortdatensatzes dem Ablauf einer Zeitperiode unterordnet, die von der Erfassung des Beginns des Steuerdatensatzes an gemessen wird, der von dem vorherigen I-ten Element kommt, wobei die gemessene Zeit gleich dem I-fachen des vorbestimmten konstanten Zeitintervalls minus einer Zeitdauer entsprechend dem Senden des Anfangsteils des Steuerdatensatzes ist, der von dem vorherigen I-ten Element kommt.

6. Drahtloses Übertragungsverfahren nach einem der vorherigen Ansprüche, **dadurch gekennzeichnet, dass** es einen Sendeeinstellschritt der Fernsteuereinrichtung (20) während einer ersten vorbestimmten konstanten Zeit und einem Empfangseinstellschritt der Fernsteuereinrichtung (20) während einer zweiten Zeit, die kleiner als eine maximale vorbestimmte Zeit ist, aufweist.

7. Verfahren zur drahtlosen Übertragung nach Anspruch 6, **dadurch gekennzeichnet, dass**, wenn das Kommunikationssystem N Elemente (20, 30, 40, 12) aufweist, die in einer bestimmten Reihenfolge agieren und wenigstens die Fernsteuereinrichtung (20) und die Übertragungseinrichtung (12) umfassen, der Verzögerungsschritt für jedes der Elemente (30, 40, 12) ausgeführt wird, mit Ausnahme der Fernsteuervorrichtung (20), die das Masterelement bildet, wobei die erste vorbestimmte Zeit eine Größe zwischen dem (N-2)-fachen des vorbestimmten konstanten Zeitintervalls und dem (N-1)-fachen des vorbestimmten konstanten Zeitintervalls hat.

8. Drahtloses Übertragungsverfahren nach Anspruch 6 oder 7, **dadurch gekennzeichnet, dass** das Kommunikationssystem N Elemente (20, 30, 40, 12) aufweist, die in einer bestimmten Reihenfolge agieren und wenigstens die Fernsteuereinrichtung (20) und die Übertragungseinrichtung (12) umfassen, wobei der Verzögerungsschritt für jedes der Elemente (20, 30, 40, 12) durchgeführt wird, mit der Ausnahme der Fernsteuereinrichtung (20), die das Masterelement bildet, wobei die vorbestimmte maximale Zeit eine Größe zwischen dem (N-1)-fachen des vorbestimmten konstanten Zeitintervalls und dem N-fachen des vorbestimmten konstanten Zeitintervalls hat.

9. Drahtloses Übertragungsverfahren nach einem der vorhergehenden Ansprüche, **dadurch gekennzeichnet, dass**, wenn das Kommunikationssystem periodisch Datenaustauschoperationen durchführt, das Übertragungsverfahren auch einen Prüfschritt umfasst, um zu überprüfen, ob die Aussendung eines Steuerdatensatzes den Empfang eines Empfangsdatensatzes bewirkt, sowie einen Offset-Schritt zum Verschieben einer Datenaustauschoperation um eine bestimmte Zeitdauer aufweist, die geringer als die Dauer der Datenaustauschoperationen ist, wenn das Senden eines Steuerdatensatzes einer vorherigen Datenaustauschoperation den Empfang eines Antwortdatensatzes veranlasst hat, wobei die Datenaustauschoperationen nach dem Offset-Schritt mit der gleichen Periodizität, beginnend mit der verschobenen Datenaustauschoperation, wieder aufgenommen wird.

10. Drahtloses Übertragungsverfahren nach Anspruch 8, **dadurch gekennzeichnet, dass** die vorbestimmte Zeitdauer ausgehend von Identifizierungsdaten des Kommunikationssystems berechnet wird, das in der Fernsteuereinrichtung enthalten ist.

11. Drahtloses Übertragungsverfahren nach einem der vorhergehenden Ansprüche, **dadurch gekennzeichnet, dass** die Heizvorrichtung (10) ein elektronisch gesteuerter Boiler ist, und die Fernsteuereinrichtung (20) ein programmierbarer Thermostat ist.
